# EUROPEAN PATENT APPLICATION

(11) **EP 4 557 848 A1**
(43) Date of publication of application: **21.05.2025**
(21) Application number: 22950563.1
(22) Date of filing: 12.07.2022
(51) Int. Cl.: H04W 64/00

(54) **INPUT DETERMINATION METHOD/APPARATUS/DEVICE FOR ARTIFICIAL INTELLIGENCE (AI) MODEL**

(71) Applicant: Beijing Xiaomi Mobile Software Co., Ltd., Beijing 100085 (CN)
(72) Inventor: MU, Qin, Beijing 100085 (CN); HONG, Wei, Beijing 100085 (CN); ZHAO, Zhongyuan, Beijing 100085 (CN); ZHOU, Huixuan, Beijing 100085 (CN)
(74) Representative: Stöckeler, Ferdinand
(86) International application number: PCT/CN2022/105307
(87) International publication number: WO 2024/011433

(57) **Abstract**

The present invention belongs to the technical field of communications. Provided are an input determination method/apparatus/device for an artificial intelligence (AI) model, and a storage medium. The method comprises: a terminal device first acquiring positioning measurement results corresponding to a preset number X of base stations, wherein the preset number X is less than the total number M of all base stations participating in positioning measurement, and X and M are both positive integers; and determining, as an input of an AI model, the positioning measurement results corresponding to the X base stations. Therefore, a lightweight AI model provided in the present invention does not affect positioning precision and has relatively low complexity.

## Description

### FIELD

The present invention generally relates to the field of communication technology, and more particularly to a method/apparatus/device for determining an input of an AI model and a storage medium.

### BACKGROUND

In a new radio (NR) system, positioning based on an artificial intelligent (AI) model is introduced to improve a positioning precision.

In the related art, in a case that the positioning is based on the AI model, positioning measurement results corresponding to all base stations participating in a positioning measurement (such as an impulse response and/or a measurement power) are spliced as an input of the AI model, so that the AI model outputs position coordinates of a terminal device located or measurement information (such as a reference signal receiving power (RSRP)) used to calculate position coordinates of a terminal device located, thereby achieving a high-precision positioning function.

However, in the related art, an input dimension of the AI model is very large, which may bring a heavy burden to processing of the AI model and also provide a great demand on storage. Also, in a case that the input of the AI model needs to be transmitted over radio (such as from a base station to a terminal device, or from a terminal device to a base station), it may also bring an additional signaling burden.

### SUMMARY

The present invention provides a method/apparatus/device for determining an input of an AI model and a storage medium to solve technical problems that methods in the related art bring a heavy burden to processing of the AI model, have a very high storage requirement, and bring an additional signaling burden.

In a first aspect, an embodiment of the present invention provides a method for determining an input of an AI model, which is performed by a terminal device and includes: obtaining positioning measurement results corresponding to a preset number X of base stations, in which the preset number X is less than a total number M of all base stations participating in a positioning measurement, where X and M are both positive integers; and determining the positioning measurement results corresponding to the X base stations as the input of the AI model.

In the present invention, the terminal device may first obtain the positioning measurement results corresponding to the preset number X of base stations in a case that the AI model is deployed on a terminal device side, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

In a second aspect, an embodiment of the present invention provides a method for determining an input of an AI model, which is performed by a base station and includes: obtaining positioning measurement results corresponding to a preset number X of base stations, in which the preset number X is less than a total number M of all base stations participating in a positioning measurement, where X and M are both positive integers; and determining the positioning measurement results corresponding to the X base stations as the input of the AI model.

In a third aspect, an embodiment of the present invention provides an apparatus for determining an input of an AI model, which is configured in a terminal device and includes: a transceiving module configured to obtain positioning measurement results corresponding to a preset number X of base stations, in which the preset number X is less than a total number M of all base stations participating in a positioning measurement, where X and M are both positive integers; and a processing module configured to determine the positioning measurement results corresponding to the X base stations as the input of the AI model.

In a fourth aspect, an embodiment of the present invention provides an apparatus for determining an input of an AI model, which is configured in a base station and includes: a transceiving module configured to obtain positioning measurement results corresponding to a preset number X of base stations, in which the preset number X is less than a total number M of all base stations participating in a positioning measurement, where X and M are both positive integers; and a processing module configured to determine the positioning measurement results corresponding to the X base stations as the input of the AI model.

In a fifth aspect, an embodiment of the present invention provides a communication device, which includes a processor. When the processor invokes a computer program in a memory, the method according to the first aspect described above is implemented.

In a sixth aspect, an embodiment of the present invention provides a communication device, which includes a processor. When the processor invokes a computer program in a memory, the method according to the second aspect described above is implemented.

In a seventh aspect, an embodiment of the present invention provides a communication device, which includes a processor and a memory having stored therein a computer program. The processor is configured to execute the computer program stored in the memory, to cause the communication device to implement the method according to the first aspect described above.

In an eighth aspect, an embodiment of the present invention provides a communication device, which includes a processor and a memory having stored therein a computer program. The processor is configured to execute the computer program stored in the memory, to cause the communication device to implement the method according to the second aspect described above.

In a ninth aspect, an embodiment of the present invention provides a communication device, which includes a processor and an interface circuit. The interface circuit is configured to receive a code instruction and transmit the code instruction to the processor, and the processor is configured to run the code instruction to make the device implement the method according to the first aspect described above.

In a tenth aspect, an embodiment of the present invention provides a communication device, which includes a processor and an interface circuit. The interface circuit is configured to receive a code instruction and transmit the code instruction to the processor, and the processor is configured to run the code instruction to make the device implement the method according to the second aspect described above.

In an eleventh aspect, an embodiment of the present invention provides a communication system, which includes the communication apparatus according to the third aspect to the communication apparatus according to the fourth aspect, or the communication device according to the fifth aspect to the communication device according to the sixth aspect, or the communication device according to the seventh aspect to the communication device according to the eighth aspect, or the communication device according to the ninth aspect to the communication device according to the tenth aspect.

In a twelfth aspect, an embodiment of the present invention provides a computer-readable storage medium for storing instructions used by the above network device. The instructions, when executed, cause the terminal device to implement the method according to any one of the first aspect to the second aspect described above.

In a thirteenth aspect, an embodiment of the present invention provides a computer-readable storage medium for storing instructions used by the above network device. The instructions, when executed, cause the terminal device to implement the method according to any one of the first aspect to the second aspect described above.

In a fourteenth aspect, the present invention further provides a computer program product, which includes a computer program that, when run on a computer, causes the computer to implement the method according to any one of the first aspect to the second aspect described above.

In a fifteenth aspect, the present invention provides a chip system, which includes at least one processor and an interface, for supporting a network device to implement functions involved in the method according to any one of the first aspect to the second aspect, for example, determining or processing at least one of data and information involved in the above method. In a possible design, the chip system further includes a memory for storing computer programs and data of the source auxiliary node. The chip system may consist of chips, or may include chips and other discrete devices.

In a sixteenth aspect, the present invention provides a computer program that, when run on a computer, causes the computer to implement the method according to any one of the first aspect to the second aspect described above.

### BRIEF DESCRIPTION OF THE DRAWINGS

The above and/or additional aspects and advantages of the present invention will become apparent and more readily appreciated from the following descriptions of embodiments made with reference to the drawings, in which:
FIG. 1 is a schematic architecture diagram of a communication system provided by an embodiment of the present invention;
FIG. 2a is a schematic flowchart of a method for determining an input of an AI model provided by an embodiment of the present invention;
FIG. 2b is a schematic flowchart of a method for determining an input of an AI model provided by another embodiment of the present invention;
FIG. 2c is a schematic flowchart of a method for determining an input of an AI model provided by yet another embodiment of the present invention;
FIG. 3a is a schematic flowchart of a method for determining an input of an AI model provided by a further embodiment of the present invention;
FIG. 3b is a schematic flowchart of a method for determining an input of an AI model provided by a further embodiment of the present invention;
FIG. 4a is a schematic flowchart of a method for determining an input of an AI model provided by a further embodiment of the present invention;
FIG. 4b is a schematic flowchart of a method for determining an input of an AI model provided by a further embodiment of the present invention;
FIG. 5a is a schematic flowchart of a method for determining an input of an AI model provided by a further embodiment of the present invention;
FIG. 5b is a schematic flowchart of a method for determining an input of an AI model provided by a further embodiment of the present invention;
FIG. 6 is a schematic flowchart of a method for determining an input of an AI model provided by a further embodiment of the present invention;
FIG. 7 is a schematic flowchart of a method for determining an input of an AI model provided by a further embodiment of the present invention;
FIG. 8 is a schematic flowchart of a method for determining an input of an AI model provided by a further embodiment of the present invention;
FIG. 9 is a schematic flowchart of a method for determining an input of an AI model provided by a further embodiment of the present invention;
FIG. 10a is a schematic flowchart of a method for determining an input of an AI model provided by a further embodiment of the present invention;
FIG. 10b is a schematic flowchart of a method for determining an input of an AI model provided by a further embodiment of the present invention;
FIG. 10c is a schematic flowchart of a method for determining an input of an AI model provided by a further embodiment of the present invention;
FIG. 11 is a schematic flowchart of a method for determining an input of an AI model provided by a further embodiment of the present invention;
FIG. 12 is a schematic flowchart of a method for determining an input of an AI model provided by a further embodiment of the present invention;
FIG. 13 is a schematic flowchart of a method for determining an input of an AI model provided by a further embodiment of the present invention;
FIG. 14a is a schematic flowchart of a method for determining an input of an AI model provided by a further embodiment of the present invention;
FIG. 14b is a schematic flowchart of a method for determining an input of an AI model provided by a further embodiment of the present invention;
FIG. 14c is a schematic flowchart of a method for determining an input of an AI model provided by a further embodiment of the present invention;
FIG. 14d is a schematic flowchart of a method for determining an input of an AI model provided by a further embodiment of the present invention;
FIG. 14e is a schematic flowchart of a method for determining an input of an AI model provided by a further embodiment of the present invention;
FIG. 14f is a schematic flowchart of a method for determining an input of an AI model provided by a further embodiment of the present invention;
FIG. 15 is a schematic block diagram of an apparatus for determining an input of an AI model provided by an embodiment of the present invention;
FIG. 16 is a schematic block diagram of an apparatus for determining an input of an AI model provided by another embodiment of the present invention;
FIG. 17 is a schematic block diagram of a communication device provided by an embodiment of the present invention; and
FIG. 18 is a schematic block diagram of a chip provided by an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. Instead, they are merely examples of devices and methods consistent with some aspects of embodiments of the present invention as recited in the appended claims.

Terms used herein in embodiments of the present invention are only for the purpose of describing specific embodiments, but should not be construed to limit embodiments of the present invention. As used in embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

To facilitate understanding, the terms involved in the present invention are first introduced.

### 1. artificial intelligent (AI)

The AI is a new technical science that studies and develops theories, manners, technologies and application systems for simulating, extending and expanding human intelligence. The AI may perform complex tasks without a need for human intervention in solving tasks. Therefore, it is applied in various industries.

In order to better understand a method for determining an input of an AI model disclosed in embodiments of the present invention, a communication system to which embodiments of the present invention are applicable is first described below.

Embodiments of the present invention will be described in detail below, and examples of embodiments are illustrated in the drawings. The same or similar elements are denoted by like reference numerals throughout the descriptions. Embodiments described herein with reference to drawings are explanatory, serve to explain the present invention, and cannot be construed to limit the present invention.

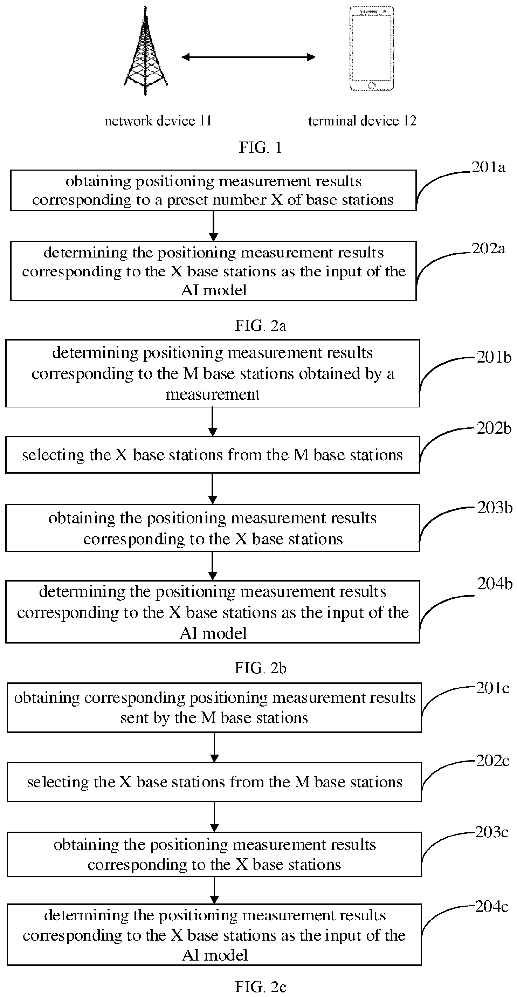

FIG. 1 is a schematic architecture diagram of a communication system provided by an embodiment of the present invention. Referring to FIG. 1, the communication system may include, but is not limited to, one network device and one terminal device. The number and forms of the devices shown in FIG. 1 are only as an example and do not constitute a limitation on embodiments of the present invention. The communication system may include two or more network devices and two or more terminal devices in practical applications. As an example for illustration, the communication system shown in FIG. 1 includes one network device 11 and one terminal device 12.

It should be noted that the technical solutions of embodiments of the present invention may be applied to various communication systems, for example, a long term evolution (LTE) system, a 5th generation (5G) mobile communication system, a 5G new radio (NR) system, or other future new mobile communication systems.

The network device 11 in embodiments of the present invention is an entity on a network side for sending or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (Wi-Fi) system. The specific technology and specific device form adopted by the network device are not limited in embodiments of the present invention. The network device provided by embodiments of the present invention may be composed of a central unit (CU) and distributed units (DU). The CU may also be called a control unit. Using the CU-DU structure allows to split a protocol layer of the network device, such as the base station, so that some of functions of the protocol layer is centrally controlled in the CU, some or all of the remaining functions of the protocol layer are distributed in the DUs, and the CU centrally controls the DUs.

The terminal device 12 in embodiments of the present invention is an entity on a user side for receiving or sending signals, such as a mobile phone. The terminal device may also be called a terminal device, a user equipment (UE), a mobile station (MS), a mobile terminal device (MT), and so on. The terminal device may be a device with a communication function, such as a car, a smart car, a mobile phone, a wearable device, a tablet Pad, a computer with a wireless transceiving function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, a wireless terminal device in a smart home, etc. The specific technology and the specific device form adopted by the terminal device are not limited in embodiments of the present invention.

FIG. 2a is a schematic flowchart of a method for determining an input of an AI model provided by an embodiment of the present invention, which is performed by a terminal device. As shown in FIG. 2a, the method for determining the input of the AI model may include the following steps.

In Step 201a, positioning measurement results corresponding to a preset number X of base stations are obtained.

In an embodiment of the present invention, the positioning measurement result may include at least one of: an impulse response obtained by measuring a channel between a base station and the terminal device being located; or a measurement power obtained by measuring a reference signal transmitted between a base station and the terminal device being located.

It should be noted that, generally speaking, a plurality of base stations may participate in a positioning measurement in a case that the terminal device is positioned/located. In an embodiment of the present invention, the preset number X is less than a total number M of all base stations participating in the positioning measurement, where X and M are both positive integers.

Furthermore, in an embodiment of the present invention, the above positioning measurement result may be obtained by measuring by the base station or by measuring by the terminal device. Also, under the premise that the AI model is deployed on the terminal device, a manner of "obtaining the positioning measurement results corresponding to the preset number X of base stations" in this step may be different in a case that a measurement execution subject for the positioning measurement results is different, and this part of content may be introduced in detail in the following embodiments.

In step 202a, the positioning measurement results corresponding to the X base stations are determined as the input of the AI model.

In an embodiment of the present invention, by inputting the positioning measurement results corresponding to the X base stations into the AI model, the AI model may output position coordinates of a terminal device located or measurement information (such as an RSRP) used to calculate position coordinates of a terminal device located, thereby achieving a high-precision positioning function.

To summarize, in the method for determining the input of the AI model provided in the embodiments of the present invention, in a case that the AI model is deployed on a terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

Furthermore, it should be noted that in actual application scenarios, in a case that the AI model is deployed on the terminal device, a measurement execution terminal for the positioning measurement result(s) may be the terminal device or the base station. Based on this, the following embodiments specifically introduce the method of the present invention in a case where an AI model deployment terminal and the measurement execution terminal for the positioning measurement results are at the same side or not at the same side.

FIG. 2b is a schematic flowchart of a method for determining an input of an AI model provided by an embodiment of the present invention, which is performed by a terminal device. In this embodiment, the AI model is deployed on the terminal device, and a positioning measurement is performed by the terminal device. As shown in FIG. 2b, the method for determining the input of the AI model may include the following steps.

In step 201b, positioning measurement results corresponding to the M base stations obtained by a measurement are determined in response to the positioning measurement results being obtained by the measurement by the terminal device.

For the relevant introduction on how the terminal device measures and obtains the positioning measurement result, reference may be made to the description of the related art.

In step 202b, the X base stations are selected from the M base stations.

In an embodiment of the present invention, the terminal device may select the X base stations from the M base stations uniformly or non-uniformly. Further, a detailed manner on how exactly the terminal device selects the X base stations from the M base stations may be described in the following embodiments. How to understand uniform?

In step 203b, the positioning measurement results corresponding to the X base stations are obtained.

In step 204b, the positioning measurement results corresponding to the X base stations are determined as the input of the AI model.

To summarize, in the method for determining the input of the AI model provided in the embodiments of the present invention, in a case that the AI model is deployed on a terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 2c is a schematic flowchart of a method for determining an input of an AI model provided by an embodiment of the present invention, which is performed by a terminal device. The AI model is deployed on the terminal device, but a positioning measurement is performed by a base station. As shown in FIG. 2c, the method for determining the input of the AI model may include the following steps.

In step 201c, corresponding positioning measurement results sent by the M base stations are obtained.

In an embodiment of the present invention, in a case that each base station participating in the positioning measurement measures its corresponding positioning measurement result, each base station may send its corresponding measurement result to the terminal device, so that the terminal device may obtain the corresponding positioning measurement results sent by the M base stations participating in the positioning measurement.

In step 202c, the X base stations are selected from the M base stations.

In step 203c, the positioning measurement results corresponding to the X base stations are obtained.

In step 204c, the positioning measurement results corresponding to the X base stations are determined as the input of the AI model.

To summarize, in the method for determining the input of the AI model provided in the embodiments of the present invention, in a case that the AI model is deployed on a terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

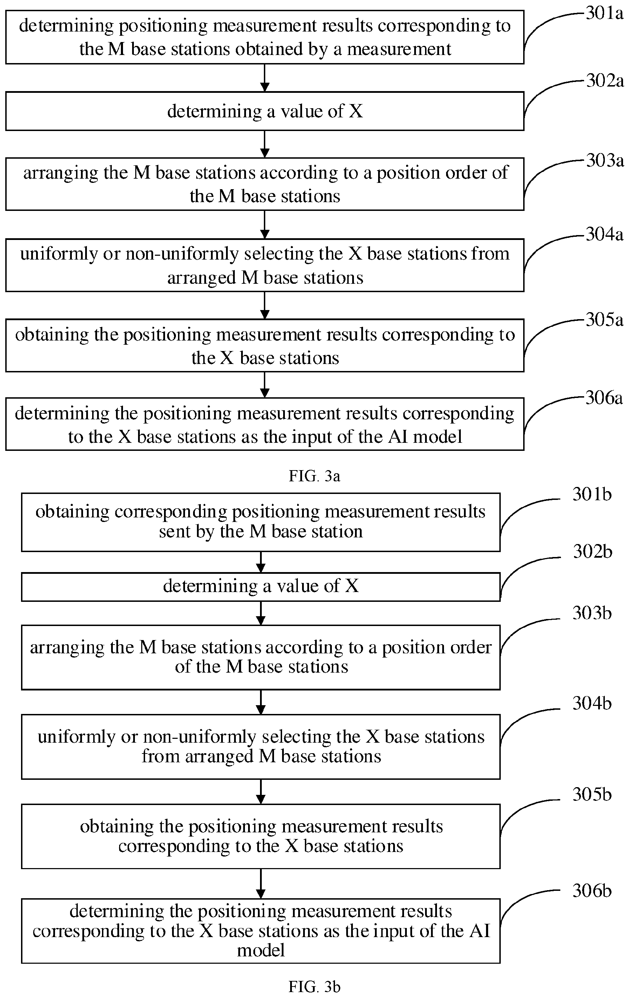

FIG. 3a is a schematic flowchart of a method for determining an input of an AI model provided by an embodiment of the present invention, which is performed by a terminal device. The AI model is deployed on the terminal device, and a positioning measurement is performed by the terminal device. As shown in FIG. 3a, the method for determining the input of the AI model may include the following steps.

In step 301a, positioning measurement results corresponding to the M base stations obtained by a measurement are determined in response to the positioning measurement results being obtained by the measurement by the terminal device.

In step 302a, a value of X is determined.

In an embodiment of the present invention, a manner for determining the value of X may include at least one of: determining the value of X based on a protocol agreement; or determining the value of X based on a configuration of the base station.

Specifically, in an embodiment of the present invention, the value of X configured by the base station in the above method may be one value selected by the base station from a possible value set of X {X1, X2, X3, X4,...}. The possible value set of X {X1, X2, X3, X4,...} may be based on the protocol agreement, and X1, X2, X3, and X4 are all possible values of X.

Further, in another embodiment of the present invention, the value of X configured by the base station in the above method may also be one value of X determined autonomously by the base station based on an implementation.

Further, in an embodiment of the present invention, the base station may select the value of X from the possible value set of X or autonomously determine the value of X according to information such as a capability or a power of the terminal device where the AI model is deployed.

For example, in an embodiment of the present invention, the value of X selected by the base station or the value of X determined autonomously by the base station may be large in a case that the capability of the terminal device where the AI model is deployed is high or the power of the terminal device where the AI model is deployed is large, or the value of X selected by the base station or the value of X determined autonomously by the base station may be small in a case that the capability of the terminal device where the AI model is deployed is high or the power of the terminal device where the AI model is deployed is small.

In step 303a, the M base stations are arranged according to a position order of the M base stations.

In an embodiment of the present invention, each base station participating in the positioning measurement may send its position coordinates to the terminal device. Further, the terminal device may arrange the M base stations in order based on the position coordinates of the M base stations, such as from east to west or from south to north, or from far to near or from near to far from the terminal device.

In step 304a, the X base stations are uniformly or non-uniformly selected from arranged M base stations.

In an embodiment of the present invention, the above uniform selection may be a regular selection of base stations. Also, the above non-uniform selection may be a random selection of base stations.

For example, assuming that 18 base stations participating in the positioning measurement are provided, after the 18 base stations are arranged according to a position order of the 18 base stations, 18 arranged base stations may be numbered first, such as 1 to 18. Afterwards, in a case that the value of X being 6 is determined, 6 base stations numbered {3, 6, 9, 12, 15, 18} may be uniformly selected from the 18 base stations, or 6 base stations numbered {3, 4, 9, 10, 15, 16} may be non-uniformly selected from the 18 base stations.

In step 305a, the positioning measurement results corresponding to the X base stations are obtained.

In step 306a, the positioning measurement results corresponding to the X base stations are determined as the input of the AI model.

It should be noted that, in a case that the AI model outputs the position coordinates of the terminal device located or outputs the measurement information used to calculate the position coordinates of the terminal device located, in addition to the positioning measurement results corresponding to the base stations participating in the positioning measurement, the position coordinates of the base stations are also needed. Based on this, during the positioning measurement, in a case that the AI model is deployed on the terminal device, the terminal device may select same X base stations when performing the positioning measurements at different times. Since the terminal device selects the same X base stations for each positioning measurement, the position coordinates of the X base stations may be stored in the AI model. Therefore, in a case that the AI model is configured to locate the terminal device, it does not need to input the position coordinates of the X base stations repeatedly, but only needs to input the positioning measurement results corresponding to the X base stations, which reduces an input dimension and reduces a signaling overhead.

To summarize, in the method for determining the input of the AI model provided in the embodiments of the present invention, in a case that the AI model is deployed on a terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 3b is a schematic flowchart of a method for determining an input of an AI model provided by an embodiment of the present invention, which is performed by a terminal device. The AI model is deployed on the terminal device, but a positioning measurement is performed by a base station. As shown in FIG. 3b, the method for determining the input of the AI model may include the following steps.

In step 301b, corresponding positioning measurement results sent by the M base stations are obtained in response to the positioning measurement results being obtained by a measurement by the base station.

In step 302b, a value of X is determined.

In step 303b, the M base stations are arranged according to a position order of the M base stations.

In step 304b, the X base stations are uniformly or non-uniformly selected from arranged M base stations.

In step 305b, the positioning measurement results corresponding to the X base stations are obtained.

In step 306b, the positioning measurement results corresponding to the X base stations are determined as the input of the AI model.

For the relevant introduction of the steps 301b to 306b, reference may be made to the description of the above embodiments.

It should be noted that, in a case that the AI model outputs the position coordinates of the terminal device located or outputs the measurement information used to calculate the position coordinates of the terminal device located, in addition to the positioning measurement results corresponding to the base stations participating in the positioning measurement, the position coordinates of the base stations are also needed. Based on this, during the positioning measurement, in a case that the AI model is deployed on the terminal device, the terminal device may select same X base stations when performing the positioning measurements at different times. Since the terminal device selects the same X base stations for each positioning measurement, the position coordinates of the X base stations may be stored in the AI model. Therefore, in a case that the AI model is configured to locate the terminal device, it does not need to input the position coordinates of the X base stations repeatedly, but only needs to input the positioning measurement results corresponding to the X base stations, which reduces an input dimension and reduces a signaling overhead.

To summarize, in the method for determining the input of the AI model provided in the embodiments of the present invention, in a case that the AI model is deployed on a terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

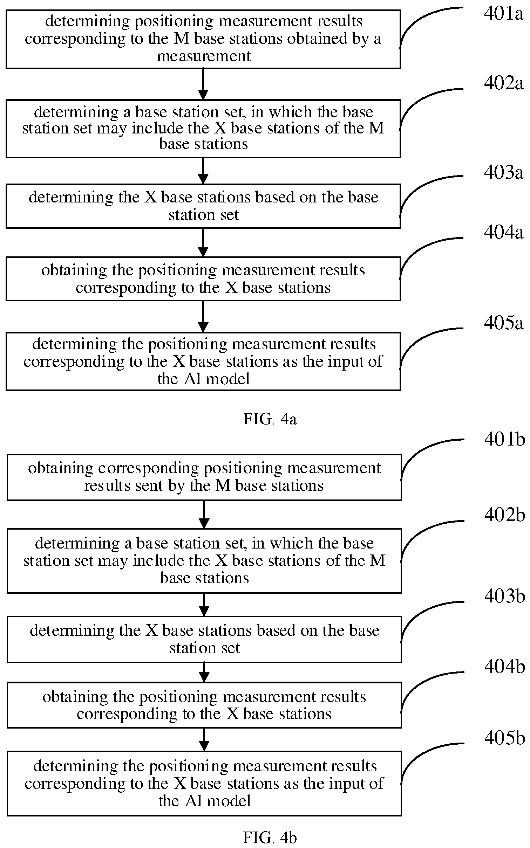

FIG. 4a is a schematic flowchart of a method for determining an input of an AI model provided by an embodiment of the present invention, which is performed by a terminal device. The AI model is deployed on the terminal device, and a positioning measurement is performed by the terminal device. As shown in FIG. 4a, the method for determining the input of the AI model may include the following steps.

In step 401a, positioning measurement results corresponding to the M base stations obtained by a measurement are determined in response to the positioning measurement results being obtained by the measurement by the terminal device.

In step 402a, a base station set is determined. The base station set may include the X base stations of the M base stations.

In an embodiment of the present invention, a manner for determining the base station set includes at least one of: determining the base station set based on a protocol agreement; or determining the base station set based on a configuration of the base station.

Specifically, in an embodiment of the present invention, the base station set configured by the base station in the above method may be one set selected by the base station from a candidate base station set {S1(X), S2(X), S3(X),...}. The candidate base station set {S1(X), S2(X), S3(X),...} may be based on the protocol agreement, S1(X), S2(X), S3(X) are all candidate base station sets, S1(X), S2(X), S3(X) respectively include X base stations of M base stations, and the X base stations included in S1(X), S2(X), S3(X) are different. Also, it should be noted that, in an embodiment of the present invention, a number of base stations included in different candidate base station sets may be the same or different, that is, the number of the base stations included in S1(X), S2(X), and S3(X) may be the same or different.

In another embodiment of the present invention, the base station set configured by the base station in the above method may be a set determined autonomously by the base station based on an implementation.

Further, it should be noted that, in an embodiment of the present invention, the M base stations may be numbered. Further, elements of the above base station set may be the serial numbers of the X base stations selected.

For example, in an embodiment of the present invention, assuming that 18 base stations participating in the positioning measurement are provided, after the 18 base stations are arranged according to a position order of the 18 base stations, 18 arranged base stations may be numbered, such as 1 to 18. At this time, the base station set determined in this step may be, for example, {3, 4, 9, 10, 15, 16}, that is, the base station set includes 6 base stations numbered 3, 4, 9, 10, 15, and 16.

In step 403a, the X base stations are determined based on the base station set.

In an embodiment of the present invention, specifically, base stations in the base station set are determined to be the X base stations.

In step 404a, the positioning measurement results corresponding to the X base stations are obtained.

In step 405a, the positioning measurement results corresponding to the X base stations are determined as the input of the AI model.

It should be noted that, in a case that the AI model outputs position coordinates of a terminal device located or outputs measurement information used to calculate position coordinates of a terminal device located, in addition to the positioning measurement results corresponding to the base stations participating in the positioning measurement, the position coordinates of the base stations are also needed. Based on this, during the positioning measurement, in a case that the AI model is deployed on the terminal device, the terminal device may select same X base stations when performing the positioning measurements at different times. Since the terminal device selects the same X base stations for each positioning measurement, the position coordinates of the X base stations may be stored in the AI model. Therefore, in a case that the AI model is configured to locate the terminal device, it does not need to input the position coordinates of the X base stations repeatedly, but only needs to input the positioning measurement results corresponding to the X base stations, which reduces an input dimension and reduces a signaling overhead.

To summarize, in the method for determining the input of the AI model provided in the embodiments of the present invention, in a case that the AI model is deployed on a terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 4b is a schematic flowchart of a method for determining an input of an AI model provided by an embodiment of the present invention, which is performed by a terminal device. The AI model is deployed on the terminal device, but a positioning measurement is performed by a base station. As shown in FIG. 4b, the method for determining the input of the AI model may include the following steps.

In step 401b, corresponding positioning measurement results sent by the M base stations are obtained in response to the positioning measurement results being obtained by a measurement by the base station.

In step 402b, a base station set is determined. The base station set may include the X base stations of the M base stations.

In step 403b, the X base stations are determined based on the base station set.

In step 404b, the positioning measurement results corresponding to the X base stations are obtained.

In step 405b, the positioning measurement results corresponding to the X base stations are determined as the input of the AI model.

For the relevant introduction of the steps 401b to 405b, reference may be made to the description of the above embodiments.

It should be noted that, in a case that the AI model outputs the position coordinates of the terminal device located or outputs the measurement information used to calculate the position coordinates of the terminal device located, in addition to the positioning measurement results corresponding to the base stations participating in the positioning measurement, the position coordinates of the base stations are also needed. Based on this, during the positioning measurement, in a case that the AI model is deployed on the terminal device, the terminal device may select same X base stations when performing the positioning measurements at different times. Since the terminal device selects the same X base stations for each positioning measurement, the position coordinates of the X base stations may be stored in the AI model. Therefore, in a case that the AI model is configured to locate the terminal device, it does not need to input the position coordinates of the X base stations repeatedly, but only needs to input the positioning measurement results corresponding to the X base stations, which reduces an input dimension and reduces a signaling overhead.

To summarize, in the method for determining the input of the AI model provided in the embodiments of the present invention, in a case that the AI model is deployed on a terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

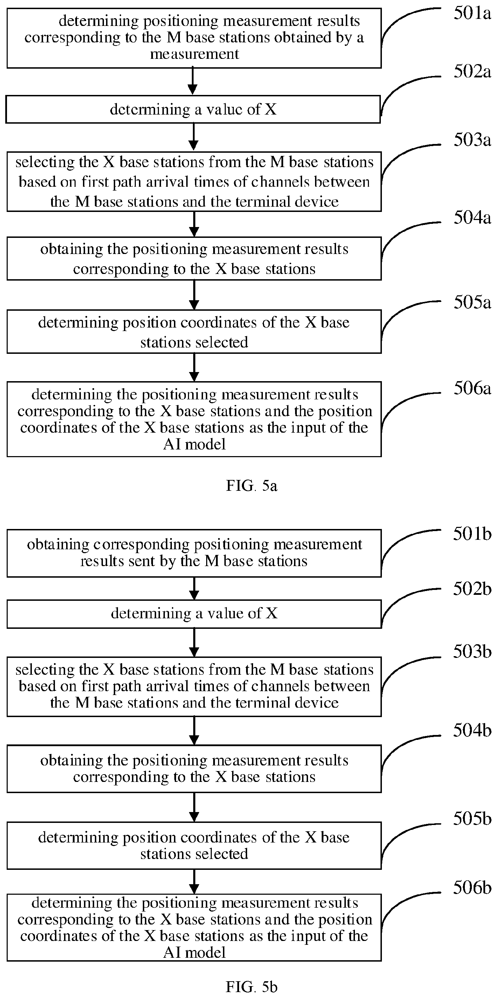

FIG. 5a is a schematic flowchart of a method for determining an input of an AI model provided by an embodiment of the present invention, which is performed by a terminal device. The AI model is deployed on the terminal device, and a positioning measurement is performed by the terminal device. As shown in FIG. 5a, the method for determining the input of the AI model may include the following steps.

In step 501a, positioning measurement results corresponding to the M base stations obtained by a measurement are determined in response to the positioning measurement results being obtained by the measurement by the terminal device.

In step 502a: a value of X is determined.

For a detailed introduction of the step 502a, reference may be made to the description of the above embodiments.

In step 503a, the X base stations are selected from the M base stations based on first path arrival times of channels between the M base stations and the terminal device.

In an embodiment of the present invention, above selecting the X base stations from the M base stations based on the first path arrival times of the channels between the M base stations and the terminal device may include: selecting the X base stations from the M base stations, where the X base stations having shortest first path arrival times among the first path arrival times of the channels between the M base stations and the terminal device are selected.

For example, assuming that a total number of base stations participating in the positioning measurement is 18, and the value of X determined in the above step 502a is 6. At this time, 6 base stations having the shortest first path arrival times among the first path arrival times of the channels between the terminal device and 18 base stations are selected.

In step 504a, the positioning measurement results corresponding to the X base stations are obtained.

In step 505a, position coordinates of the X base stations selected are determined.

In an embodiment of the present invention, in a case that the AI model outputs position coordinates of a terminal device located or outputs measurement information used to calculate position coordinates of a terminal device located, in addition to the positioning measurement results corresponding to the base stations participating in the positioning measurement, the position coordinates of the base stations are also needed.

On this basis, during the positioning measurement, in a case that the AI model is deployed on a terminal device side, the terminal device may move, causing a position of the terminal device to change. Based on this, in a case that each positioning measurement selects the X base stations from the M base stations based on the first path arrival times of the channels, then due to the change in the position of the terminal device, a first path arrival time of a channel between the terminal device and each base station may be different under positioning measurements at different times, and different X base stations may be selected. At this time, in order to ensure that the AI model may correctly output the position coordinates or measurement information of the terminal device located, it further needs to determine position coordinates of the X base stations selected by the terminal device each time, and input them into the AI model together with the positioning measurement results corresponding to the X base stations.

In an embodiment of the present invention, the above position coordinates of the base stations may be represented by two-dimensional coordinates (x, y).

Further, in an embodiment of the present invention, a manner for determining the position coordinates of the X base stations above may include: obtaining position coordinates of a base station sent by the base station.

In step 506a, the positioning measurement results corresponding to the X base stations and the position coordinates of the X base stations are determined as the input of the AI model.

In an embodiment of the present invention, by inputting the positioning measurement results corresponding to the X base stations and the position coordinates of the X base stations into the AI model, the AI model may output the position coordinates of the terminal device located or the measurement information (such as an RSRP) used to calculate the position coordinates of the terminal device located, thereby achieving a high-precision positioning function.

To summarize, in the method for determining the input of the AI model provided in the embodiments of the present invention, in a case that the AI model is deployed on the terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 5b is a schematic flowchart of a method for determining an input of an AI model provided by an embodiment of the present invention, which is performed by a terminal device. The AI model is deployed on the terminal device, but a positioning measurement is performed by a base station. As shown in FIG. 5b, the method for determining the input of the AI model may include the following steps.

In step 501b, corresponding positioning measurement results sent by the M base stations are obtained in response to the positioning measurement results being obtained by a measurement by the base station.

In step 502b, a value of X is determined.

In step 503b, the X base stations are selected from the M base stations based on first path arrival times of channels between the M base stations and the terminal device.

In step 504b, the positioning measurement results corresponding to the X base stations are obtained.

In step 505b, position coordinates of the X base stations selected are determined.

In step 506b, the positioning measurement results corresponding to the X base stations and the position coordinates of the X base stations are determined as the input of the AI model.

For the relevant introduction of the steps 501b to 506b, reference may be made to the description of the above embodiments.

In an embodiment of the present invention, in a case that the AI model outputs position coordinates of a terminal device located or outputs measurement information used to calculate position coordinates of a terminal device located, in addition to the positioning measurement results corresponding to the base stations participating in the positioning measurement, the position coordinates of the base stations are also needed.

On this basis, during the positioning measurement, in a case that the AI model is deployed on a terminal device side, the terminal device may move, causing a position of the terminal device to change. Based on this, in a case that each positioning measurement selects the X base stations from the M base stations based on the first path arrival times of the channels, then due to the change in the position of the terminal device, a first path arrival time of a channel between the terminal device and each base station may be different under positioning measurements at different times, and different X base stations may be selected. At this time, in order to ensure that the AI model may correctly output the position coordinates or measurement information of the terminal device located, it needs to determine position coordinates of the X base stations selected by the terminal device each time, and input them into the AI model together with the positioning measurement results corresponding to the X base stations.

To summarize, in the method for determining the input of the AI model provided in the embodiments of the present invention, in a case that the AI model is deployed on the terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

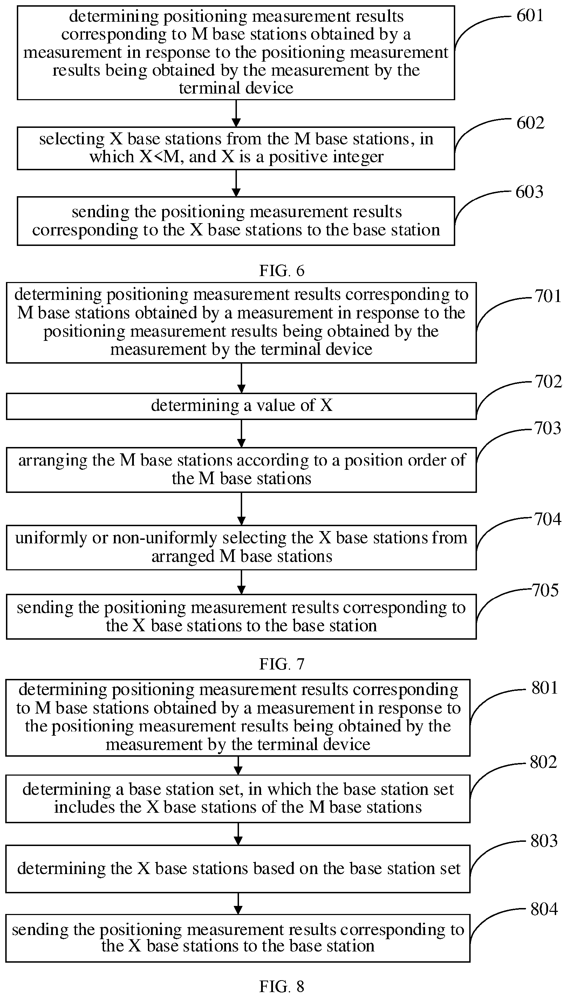

FIG. 6 is a schematic flowchart of a method for determining an input of an AI model provided by an embodiment of the present invention, which is performed by a terminal device. The AI model is deployed on a base station. As shown in FIG. 6, the method for determining the input of the AI model may include the following steps.

In step 601, positioning measurement results corresponding to M base stations obtained by a measurement are determined in response to the positioning measurement results being obtained by the measurement by the terminal device. M is a total number of all base stations participating in a positioning measurement, and M is a positive integer.

In step 602, X base stations are selected from the M base stations. X<M, and X is a positive integer.

In step 603, the positioning measurement results corresponding to the X base stations are sent to the base station where the AI model is deployed.

For the relevant introduction of the steps 601 to 603, reference may be made to the description of the above embodiments.

To summarize, in the method for determining the input of the AI model provided in the embodiments of the present invention, in a case that the AI model is deployed on a base station side, the terminal device may determine the positioning measurement results corresponding to the M base stations participating in the positioning measurement, and then select the X base stations from the M base stations, and send the positioning measurement results of the X base stations to the base station where the AI model is deployed, so as to determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 7 is a schematic flowchart of a method for determining an input of an AI model provided by an embodiment of the present invention, which is performed by a terminal device. The AI model is deployed on a base station, but a positioning measurement result is obtained by a measurement by the terminal device. As shown in FIG. 7, the method for determining the input of the AI model may include the following steps.

In step 701, positioning measurement results corresponding to M base stations obtained by a measurement are determined in response to the positioning measurement results being obtained by the measurement by the terminal device. M is a total number of all base stations participating in a positioning measurement, and M is a positive integer.

In step 702, a value of X is determined.

In an embodiment of the present invention, a manner for determining the value of X may include: determining the value of X based on a protocol agreement; or determining the value of X based on a configuration of the base station.

In step 703, the M base stations are arranged according to a position order of the M base stations.

In step 704, the X base stations are uniformly or non-uniformly selected from arranged M base stations.

In step 705, the positioning measurement results corresponding to the X base stations are sent to the base station where the AI model is deployed.

For the relevant introduction of the steps 701 to 705, reference may be made to the description of the above embodiments.

It should be noted that during the positioning measurement, in a case that the AI model is deployed on a base station side, the AI model may be used to measure a plurality of terminal devices. On this basis, in a case that the AI model outputs position coordinates of a terminal device located or outputs measurement information used to calculate position coordinates of a terminal device located, in addition to the positioning measurement results corresponding to the base stations participating in the positioning measurement, the position coordinates of the base stations are also needed. Based on this, each terminal device may select same X base stations in a case that the AI model is configured to measure the plurality of terminal devices. At this time, since X base stations selected by different terminal devices are the same, the position coordinates of the X base stations may be stored in the AI model. Therefore, in a case that the AI model is configured to locate each terminal device, it does not need to input the position coordinates of the X base stations, but only needs to input the positioning measurement results corresponding to the X base stations, which reduces an input dimension and reduces a signaling overhead.

To summarize, in the method for determining the input of the AI model provided in embodiments of the present invention, in a case that the AI model is deployed on the base station side, the terminal device may determine the positioning measurement results corresponding to the M base stations participating in the positioning measurement, and then select the X base stations from the M base stations, and send the positioning measurement results of the X base stations to the base station where the AI model is deployed, so as to determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 8 is a schematic flowchart of a method for determining an input of an AI model provided by an embodiment of the present invention, which is performed by a terminal device. The AI model is deployed on a base station, but a positioning measurement result is obtained by a measurement by the terminal device. As shown in FIG. 8, the method for determining the input of the AI model may include the following steps.

In step 801, positioning measurement results corresponding to M base stations obtained by a measurement are determined in response to the positioning measurement results being obtained by the measurement by the terminal device. M is a total number of all base stations participating in a positioning measurement, and M is a positive integer.

In step 802, a base station set is determined. The base station set includes the X base stations of the M base stations.

In an embodiment of the present invention, a manner for determining the base station set may include at least one of: determining the base station set based on a protocol agreement; or determining the base station set based on a configuration of the base station.

In step 803, the X base stations are determined based on the base station set.

In step 804, the positioning measurement results corresponding to the X base stations are sent to the base station where the AI model is deployed.

For the relevant introduction of the steps 801 to 804, reference may be made to the description of the above embodiments.

It should be noted that during the positioning measurement, in a case that the AI model is deployed on a base station side, the AI model may be used to measure a plurality of terminal devices. On this basis, in a case that the AI model outputs position coordinates of a terminal device located or outputs measurement information used to calculate position coordinates of a terminal device located, in addition to the positioning measurement results corresponding to the base stations participating in the positioning measurement, the position coordinates of the base stations are also needed. Based on this, each terminal device may select same X base stations in a case that the AI model is configured to measure the plurality of terminal devices. At this time, since X base stations selected by different terminal devices are the same, the position coordinates of the X base stations may be stored in the AI model. Therefore, in a case that the AI model is configured to locate each terminal device, it does not need to input the position coordinates of the X base stations, but only needs to input the positioning measurement results corresponding to the X base stations, which reduces an input dimension and reduces a signaling overhead.

To summarize, in the method for determining the input of the AI model provided in embodiments of the present invention, in a case that the AI model is deployed on the base station side, the terminal device may determine the positioning measurement results corresponding to the M base stations participating in the positioning measurement, and then select the X base stations from the M base stations, and send the positioning measurement results of the X base stations to the base station where the AI model is deployed, so as to determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

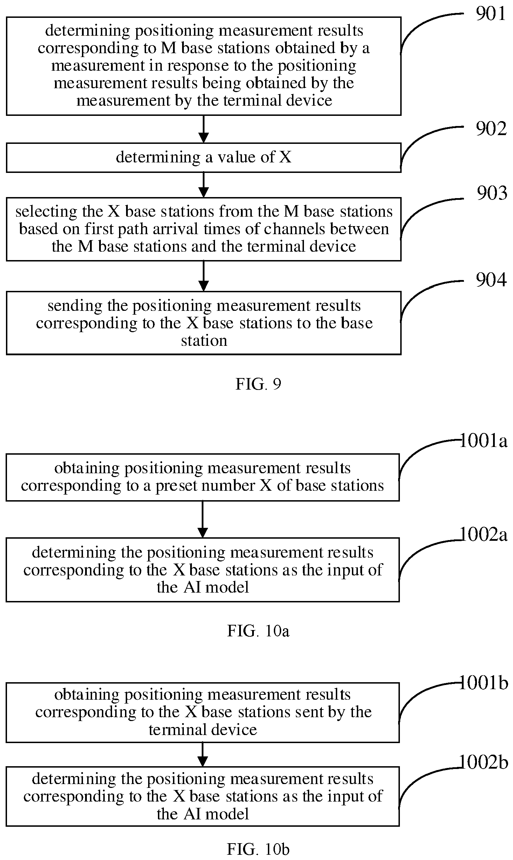

FIG. 9 is a schematic flowchart of a method for determining an input of an AI model provided by an embodiment of the present invention, which is performed by a terminal device. The AI model is deployed on a base station, but a positioning measurement result is obtained by a measurement by the terminal device. As shown in FIG. 9, the method for determining the input of the AI model may include the following steps.

In step 901, positioning measurement results corresponding to M base stations obtained by a measurement are determined in response to the positioning measurement results being obtained by the measurement by the terminal device. M is a total number of all base stations participating in a positioning measurement, and M is a positive integer.

In step 902, a value of X is determined.

In step 903, the X base stations are selected from the M base stations based on first path arrival times of channels between the M base stations and the terminal device.

In an embodiment of the present invention, selecting the X base stations from the M base stations based on the first path arrival times of the channels between the M base stations and the terminal device includes: selecting the X base stations from the M base stations, where the X base stations having the shortest first path arrival times among the first path arrival times of the channels between the M base stations and the terminal device are selected.

In step 904, the positioning measurement results corresponding to the X base stations are sent to the base station where the AI model is deployed.

For the relevant introduction of the steps 901 to 904, reference may be made to the description of the above embodiments.

In an embodiment of the present invention, in a case that the AI model outputs position coordinates of a terminal device located or outputs measurement information used to calculate position coordinates of a terminal device located, in addition to the positioning measurement results corresponding to the base stations participating in the positioning measurement, the position coordinates of the base stations are also needed.

On this basis, during the positioning measurement, in a case that the AI model is deployed on a base station side, the AI model may be used to measure a plurality of terminal devices. At this time, in a case that the X base stations are selected from the M base stations based on the first path arrival times of the channels, due to different positions of different terminal devices, first path arrival times of channels between different terminal devices and the base station may be different, so different X base stations may be selected for different terminal devices. At this time, in order to ensure that the AI model may successfully output position coordinates or measurement information of each terminal device located, it needs to determine position coordinates of X base stations selected by each terminal device and input them into the AI model together with the positioning measurement results corresponding to the X base stations.

To summarize, in the method for determining the input of the AI model provided in the embodiments of the present invention, in a case that the AI model is deployed on the base station side, the terminal device may determine the positioning measurement results corresponding to the M base stations participating in the positioning measurement, and then select the X base stations from the M base stations, and send the positioning measurement results of the X base stations to the base station where the AI model is deployed, so as to determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 10a is a schematic flowchart of a method for determining an input of an AI model provided by an embodiment of the present invention, which is performed by a base station. As shown in FIG. 10a, the method for determining the input of the AI model may include the following steps.

In step 1001a, positioning measurement results corresponding to a preset number X of base stations are obtained, in which the preset number X is less than a total number M of all base stations participating in a positioning measurement, where X and M are both positive integers.

In step 1002a, the positioning measurement results corresponding to the X base stations are determined as the input of the AI model.

For the relevant introduction of the steps 1001a to 1002a, reference may be made to the description of the above embodiments.

Further, in an embodiment of the present invention, the base station that executes the method may be a base station where the AI model is deployed.

To summarize, in the method for determining the input of the AI model provided in the embodiments of the present invention, in a case that the AI model is deployed on a base station side, the base station may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 10b is a schematic flowchart of a method for determining an input of an AI model provided by an embodiment of the present invention, which is performed by a base station. The AI model is deployed on the base station, but a positioning measurement is performed by a terminal device. As shown in FIG. 10b, the method for determining the input of the AI model may include the following steps.

In step 1001b, positioning measurement results corresponding to the X base stations sent by the terminal device are obtained in response to the positioning measurement results being obtained by a measurement by the terminal device.

In step 1002b, the positioning measurement results corresponding to the X base stations are determined as the input of the AI model.

In an embodiment of the present invention, in a case that the AI model is configured to locate a plurality of terminal devices, the base station deployed with the AI model may receive positioning measurement results corresponding to same X base stations from the plurality of terminal devices (at this time, each terminal device selects the X base stations using the method shown in FIG. 7 or FIG. 8 above). Based on this, the AI model may store the position coordinates of the X base stations. In a case that the AI model is configured to locate a plurality of different terminal devices, the AI model may output position coordinates of a terminal device located or output measurement information used to calculate position coordinates of a terminal device located by only using the positioning measurement results corresponding to the X base stations sent by the terminal device located as the input of the AI model.

In another embodiment of the present invention, in a case that the AI model is configured to locate a plurality of terminal devices, the base station deployed with the AI model may receive positioning measurement results corresponding to different X base stations from the plurality of terminal devices (at this time, a terminal device selects the X base stations using the method shown in FIG. 9 above). Based on this, in a case that the AI model is configured to locate a plurality of different terminal devices, the base station deployed with the AI model should obtain position coordinates of X base stations currently determined by a terminal device located, and use the position coordinates of the X base stations together with the positioning measurement results corresponding to the X base stations sent by the terminal device located as the input of the AI model, so that the AI model outputs position coordinates of the terminal device located or outputs measurement information used to calculate position coordinates of the terminal device located. A manner for the base station deployed with the AI model to obtain the position coordinates of the X base stations currently determined by the terminal device may be: obtaining corresponding position coordinates from the X base stations respectively, or obtaining the position coordinates of the X base stations from the terminal device.

For the relevant introduction of the steps 1001b to 1002b, reference may be made to the description of the above embodiments.

To summarize, in the method for determining the input of the AI model provided in the embodiments of the present invention, in a case that the AI model is deployed on a base station side, the base station may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

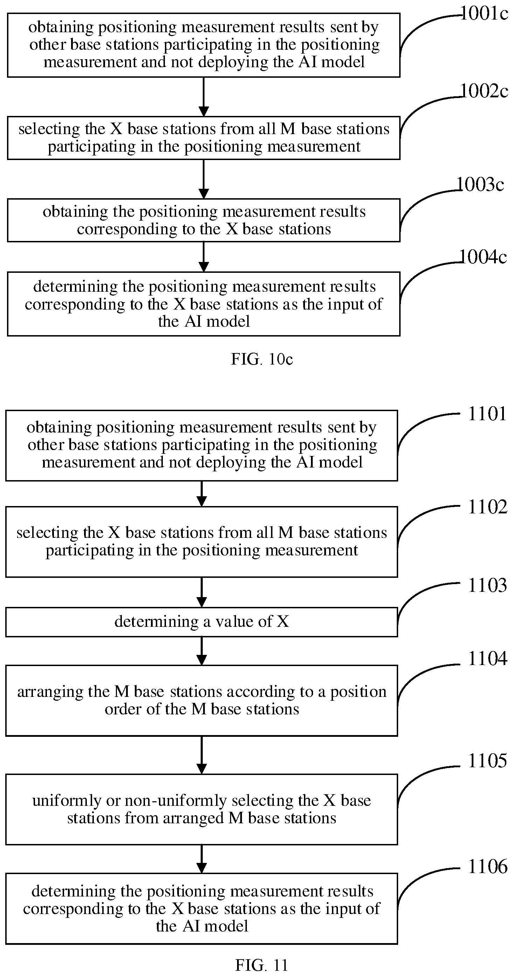

FIG. 10c is a schematic flowchart of a method for determining an input of an AI model provided by an embodiment of the present invention, which is performed by a base station. The AI model is deployed on the base station, and a positioning measurement is obtained by a measurement by the base station. As shown in FIG. 10c, the method for determining the input of the AI model may include the following steps.

In step 1001c, positioning measurement results sent by other base stations participating in the positioning measurement and not deploying the AI model are obtained in response to the positioning measurement results being obtained by a measurement by the base station.

In an embodiment of the present invention, after the base station deployed with the AI model obtains the positioning measurement results sent by other base stations participating in the positioning measurement and not deploying the AI model, it determines its own corresponding positioning measurement results, and thus may determine positioning measurement results corresponding to all M base stations participating in the positioning measurement.

In step 1002c, the X base stations are selected from all M base stations participating in the positioning measurement.

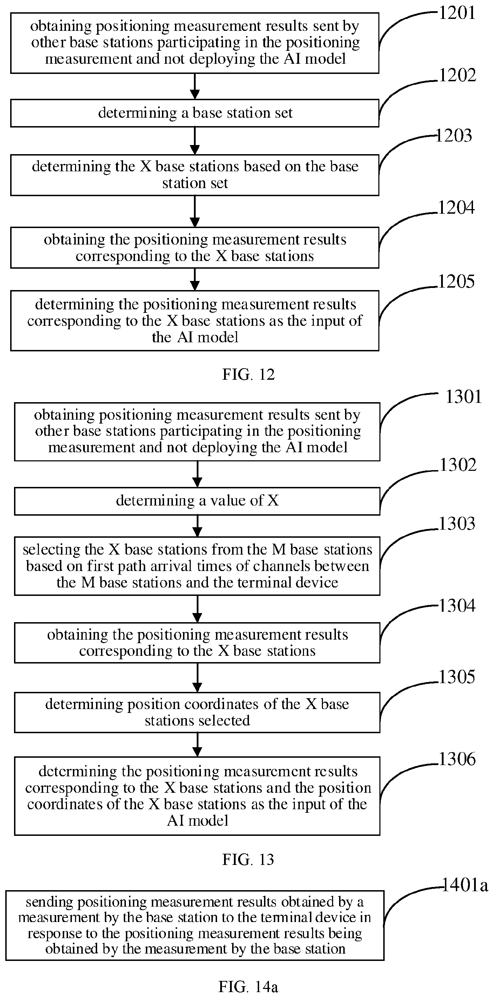

In an embodiment of the present invention, in a case that the AI model is configured to locate a plurality of terminal devices, the base station deployed with the AI model may select same X base stations from all M base stations for different terminal devices. As in the following methods of FIG. 11 and FIG. 12, the same X base stations may be selected from all M base stations.

In another embodiment of the present invention, in a case that the AI model is configured to locate a plurality of terminal devices, the base station deployed with the AI model may select different X base stations from all M base stations for different terminal devices. As in the following method of FIG. 13, the different X base stations may be selected from all M base stations.

In step 1003c, the positioning measurement results corresponding to the X base stations are obtained.

In step 1004c, the positioning measurement results corresponding to the X base stations are determined as the input of the AI model.

For the relevant introduction of the steps 1001c to 1004c, reference may be made to the description of the above embodiments.

To summarize, in the method for determining the input of the AI model provided in the embodiments of the present invention, in a case that the AI model is deployed on a base station side, the base station may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 11 is a schematic flowchart of a method for determining an input of an AI model provided by an embodiment of the present invention, which is performed by a base station. The AI model is deployed on the base station, and a positioning measurement is obtained by a measurement by the base station. As shown in FIG. 11, the method for determining the input of the AI model may include the following steps.

In step 1101, positioning measurement results sent by other base stations participating in the positioning measurement and not deploying the AI model are obtained in response to the positioning measurement results being obtained by a measurement by the base station.

In step 1102, the X base stations are selected from all M base stations participating in the positioning measurement.

In step 1103, a value of X are determined.

In an embodiment of the present invention, determining the value of X includes: determining the value of X based on a protocol agreement.

In step 1104, the M base stations are arranged according to a position order of the M base stations.

In step 1105, the X base stations are uniformly or non-uniformly selected from arranged M base stations.

In step 1106, the positioning measurement results corresponding to the X base stations are determined as the input of the AI model.

For the relevant introduction of the steps 1101 to 1106, reference may be made to the description of the above embodiments.

It should be noted that during the positioning measurement, the AI model may be used to measure a plurality of terminal devices, and the plurality of terminal devices are measured based on measurement results corresponding to same M base stations. Further, in an embodiment of the present invention, different terminal devices may select the same X base stations for embodiments of FIG. 11.

On this basis, in a case that the AI model outputs position coordinates of a terminal device located or outputs measurement information used to calculate position coordinates of a terminal device located, in addition to the positioning measurement results corresponding to the base stations participating in the positioning measurement, the position coordinates of the base stations are also needed. Based on this, since X base stations selected by different terminal devices are the same, the position coordinates of the X base stations may be stored in the AI model. Therefore, in a case that the AI model is configured to locate each terminal device, it does not need to input the position coordinates of the X base stations, but only needs to input the positioning measurement results corresponding to the X base stations, which reduces an input dimension and reduces a signaling overhead.

To summarize, in the method for determining the input of the AI model provided in the embodiments of the present invention, in a case that the AI model is deployed on a base station side, the base station may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 12 is a schematic flowchart of a method for determining an input of an AI model provided by an embodiment of the present invention, which is performed by a base station. The AI model is deployed on the base station, and a positioning measurement is performed by the base station. As shown in FIG. 12, the method for determining the input of the AI model may include the following steps.

In step 1201, positioning measurement results sent by other base stations participating in the positioning measurement and not deploying the AI model are obtained in response to the positioning measurement results being obtained by a measurement by the base station.

In step 1202, a base station set is determined. The base station set includes the X base stations of the M base stations.

In an embodiment of the present invention, determining the base station set may include: determining the base station set based on a protocol agreement.

In step 1203, the X base stations are determined based on the base station set.

In step 1204, the positioning measurement results corresponding to the X base stations are obtained.

In step 1205, the positioning measurement results corresponding to the X base stations are determined as the input of the AI model.

For the relevant introduction of the steps 1201 to 1205, reference may be made to the description of the above embodiments.

It should be noted that during the positioning measurement, the AI model may be used to measure a plurality of terminal devices, and the plurality of terminal devices are measured based on measurement results corresponding to same M base stations. Further, in an embodiment of the present invention, different terminal devices may select the same X base stations for embodiments of FIG. 12.

On this basis, in a case that the AI model outputs position coordinates of a terminal device located or outputs measurement information used to calculate position coordinates of a terminal device located, in addition to the positioning measurement results corresponding to the base stations participating in the positioning measurement, the position coordinates of the base stations are also needed. Based on this, since X base stations selected by different terminal devices are the same, the position coordinates of the X base stations may be stored in the AI model. Therefore, in a case that the AI model is configured to locate each terminal device, it does not need to input the position coordinates of the X base stations, but only needs to input the positioning measurement results corresponding to the X base stations, which reduces an input dimension and reduces a signaling overhead.

To summarize, in the method for determining the input of the AI model provided in the embodiments of the present invention, in a case that the AI model is deployed on a base station side, the base station may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 13 is a schematic flowchart of a method for determining an input of an AI model provided by an embodiment of the present invention, which is performed by a base station. The AI model is deployed on the base station, and a positioning measurement is performed by the base station. As shown in FIG. 13, the method for determining the input of the AI model may include the following steps.

In step 1301, positioning measurement results sent by other base stations participating in the positioning measurement and not deploying the AI model are obtained in response to the positioning measurement results being obtained by a measurement by the base station.

In step 1302, a value of X is determined.

In step 1303, the X base stations are selected from the M base stations based on first path arrival times of channels between the M base stations and the terminal device.

In an embodiment of the present invention, selecting the X base stations from the M base stations based on the first path arrival times of the channels between the M base stations and the terminal device includes: selecting the X base stations from the M base stations, where the X base stations having the shortest first path arrival times among the first path arrival times of the channels between the M base stations and the terminal device are selected.

In step 1304, the positioning measurement results corresponding to the X base stations are obtained.

In step 1305, position coordinates of the X base stations selected are determined.

In step 1306, the positioning measurement results corresponding to the X base stations and the position coordinates of the X base stations are determined as the input of the AI model.

For the relevant introduction of the steps 1301 to 1306, reference may be made to the description of the above embodiments.

To summarize, in the method for determining the input of the AI model provided in the embodiments of the present invention, in a case that the AI model is deployed on a base station side, the base station may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

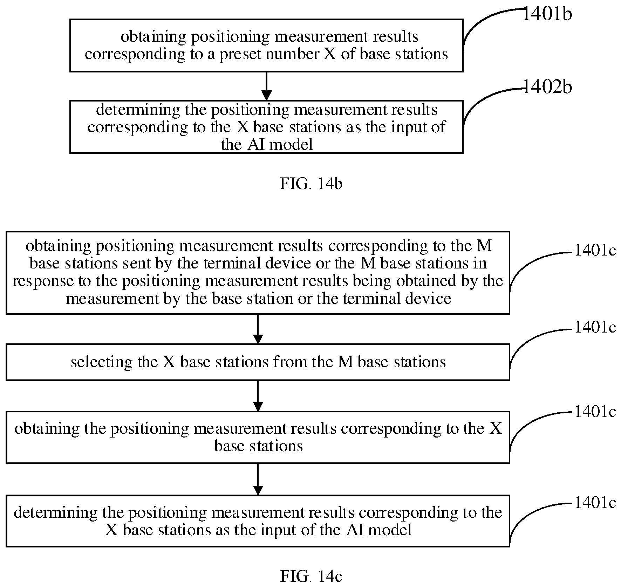

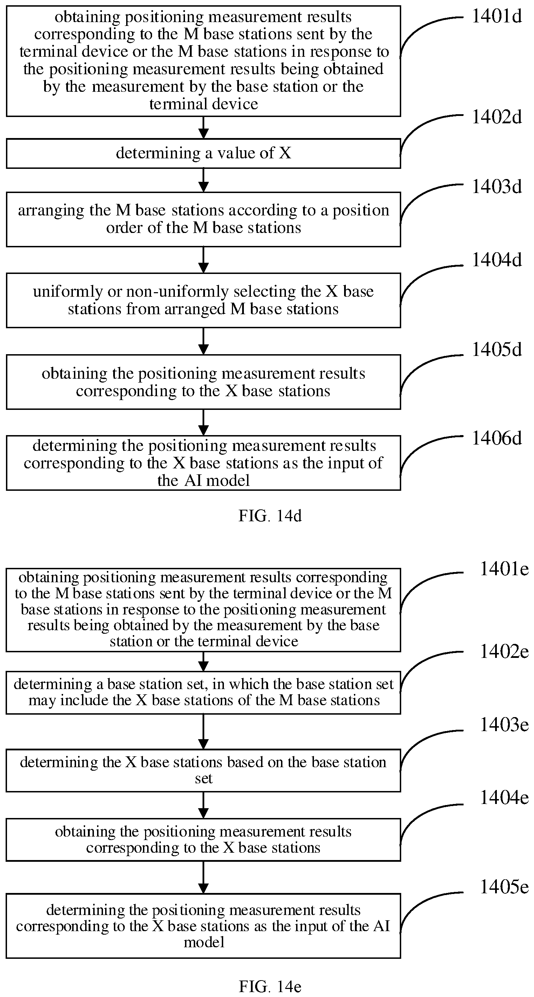

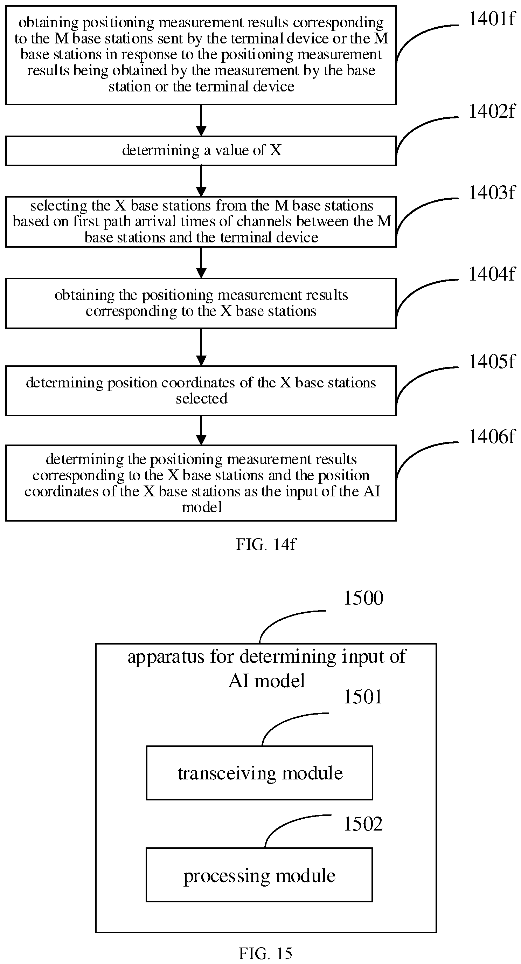

FIG. 14a is a schematic flowchart of a method for determining an input of an AI model provided by an embodiment of the present invention, which is performed by a base station. The AI model is deployed on a terminal device, and a positioning measurement is performed by a base station side. As shown in FIG. 14, the method for determining the input of the AI model may include a following step.

In step 1401a, positioning measurement results obtained by a measurement by the base station are sent to the terminal device in response to the positioning measurement results being obtained by the measurement by the base station.

In an embodiment of the present invention, the base station executing the method may be any base station participating in the positioning measurement.

For the relevant introduction of the step 1401a, reference may be made to the description of the above embodiments.

To summarize, in the method for determining the input of the AI model provided in the embodiments of the present invention, in a case that the AI model is deployed on a terminal device side, the base station participating in the positioning measurement may send positioning measurement results obtained by its measurement to the terminal device, so that the terminal device may select the positioning measurement results of the X base stations from all M base stations participating in the positioning measurement as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 14b is a schematic flowchart of a method for determining an input of an AI model provided by an embodiment of the present invention, which is performed by a first network device. The first network device is a non-terminal and non-base station device, and the AI model is deployed on the first network device. As shown in FIG. 14b, the method for determining the input of the AI model may include the following steps.

In step 1401b, positioning measurement results corresponding to a preset number X of base stations are obtained.

In an embodiment of the present invention, the above first network device may be, for example, a positioning server.

In step 1402b, the positioning measurement results corresponding to the X base stations are determined as the input of the AI model.

For the relevant introduction of the steps 1401b to 1402b, reference may be made to the description of the above embodiments.

To summarize, in the method for determining the input of the AI model provided in the embodiments of the present invention, in a case that the AI model is deployed on a first network device side, the first network device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 14c is a schematic flowchart of a method for determining an input of an AI model provided by an embodiment of the present invention, which is performed by a first network device. The first network device is a non-terminal and non-base station device, the AI model is deployed on the first network device, and a positioning measurement is performed by a base station or a terminal device. As shown in FIG. 14c, the method for determining the input of the AI model may include the following steps.

In step 1401c, positioning measurement results corresponding to the M base stations sent by the terminal device or the M base stations are obtained in response to the positioning measurement results being obtained by the measurement by the base station or the terminal device.

In step 1402c, the X base stations are selected from the M base stations.

In step 1403c, the positioning measurement results corresponding to the X base stations are obtained.

In step 1404c, the positioning measurement results corresponding to the X base stations are determined as the input of the AI model.

For the relevant introduction of the steps 1401c to 1404c, reference may be made to the description of the above embodiments.

To summarize, in the method for determining the input of the AI model provided in the embodiments of the present invention, in a case that the AI model is deployed on a first network device side, the first network device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 14d is a schematic flowchart of a method for determining an input of an AI model provided by an embodiment of the present invention, which is performed by a first network device. The first network device is a non-terminal and non-base station device, the AI model is deployed on the first network device, and a positioning measurement is performed by a base station or a terminal device. As shown in FIG. 14h, the method for determining the input of the AI model may include the following steps.

In step 1401d, positioning measurement results corresponding to the M base stations sent by the terminal device or the M base stations are obtained in response to the positioning measurement results being obtained by the measurement by the base station or the terminal device.

In step 1402d, a value of X is determined.

In step 1403d, the M base stations are arranged according to a position order of the M base stations.

In step 1404d, the X base stations are uniformly or non-uniformly selected from arranged M base stations.

In step 1405d, the positioning measurement results corresponding to the X base stations are obtained.

In step 1406d, the positioning measurement results corresponding to the X base stations are determined as the input of the AI model.

For the relevant introduction of the steps 1401d to 1406d, reference may be made to the description of the above embodiments.

To summarize, in the method for determining the input of the AI model provided in the embodiments of the present invention, in a case that the AI model is deployed on a first network device side, the first network device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 14e is a schematic flowchart of a method for determining an input of an AI model provided by an embodiment of the present invention, which is performed by a first network device. The first network device is a non-terminal and non-base station device, the AI model is deployed on the first network device, and a positioning measurement is performed by a base station or a terminal device. As shown in FIG. 14i, the method for determining the input of the AI model may include the following steps.

In step 1401e, positioning measurement results corresponding to the M base stations sent by the terminal device or the M base stations are obtained in response to the positioning measurement results being obtained by the measurement by the base station or the terminal device.

In step 1402e, a base station set is determined. The base station set may include the X base stations of the M base stations.

In step 1403e, the X base stations are determined based on the base station set.

In step 1404e, the positioning measurement results corresponding to the X base stations are obtained.

In step 1405e, the positioning measurement results corresponding to the X base stations are determined as the input of the AI model.

For the relevant introduction of the steps 1401e to 1405e, reference may be made to the description of the above embodiments.

To summarize, in the method for determining the input of the AI model provided in the embodiments of the present invention, in a case that the AI model is deployed on a first network device side, the first network device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 14f is a schematic flowchart of a method for determining an input of an AI model provided by an embodiment of the present invention, which is performed by a first network device. The first network device is a non-terminal and non-base station device, the AI model is deployed on the first network device, and a positioning measurement is performed by a base station or a terminal device. As shown in FIG. 14f, the method for determining the input of the AI model may include the following steps.

In step 1401f, positioning measurement results corresponding to the M base stations sent by the terminal device or the M base stations are obtained in response to the positioning measurement results being obtained by the measurement by the base station or the terminal device.

In step 1402f, a value of X is determined.

In step 1403f, the X base stations are selected from the M base stations based on first path arrival times of channels between the M base stations and the terminal device.

In step 1404f, the positioning measurement results corresponding to the X base stations are obtained.

In step 1405f, position coordinates of the X base stations selected are determined.

In step 1406f, the positioning measurement results corresponding to the X base stations and the position coordinates of the X base stations are determined as the input of the AI model.

For the relevant introduction of the steps 1401f to 1406f, reference may be made to the description of the above embodiments.

To summarize, in the method for determining the input of the AI model provided in the embodiments of the present invention, in a case that the AI model is deployed on a first network device side, the first network device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

FIG. 15 is a schematic block diagram of an apparatus for determining an input of an AI model provided by an embodiment of the present invention, which is configured in a terminal device. The AI model is deployed on the terminal device. As shown in FIG. 15, the apparatus may include: a transceiving module configured to obtain positioning measurement results corresponding to a preset number X of base stations, in which the preset number X is less than a total number M of all base stations participating in a positioning measurement, where X and M are both positive integers; and a processing module configured to determine the positioning measurement results corresponding to the X base stations as the input of the AI model.

To summarize, in the apparatus for determining the input of the AI model provided in the embodiments of the present invention, in a case that the AI model is deployed on a terminal device side, the terminal device may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

Optionally, in an embodiment of the present invention, the positioning measurement result includes at least one of: an impulse response obtained by measuring a channel between a base station and the terminal device being located; or a measurement power obtained by measuring a reference signal transmitted between a base station and the terminal device being located.

Optionally, in an embodiment of the present invention, in response to the AI model being deployed on the terminal device or a base station, and the positioning measurement results being obtained by a measurement by the terminal device, the transceiving module is further configured to: determine positioning measurement results corresponding to the M base stations obtained by the measurement; select the X base stations from the M base stations; and obtain the positioning measurement results corresponding to the X base stations.

Optionally, in an embodiment of the present invention, in response to the AI model being deployed on the terminal device, and the positioning measurement results being obtained by a measurement by the base station, the transceiving module is further configured to: obtain corresponding positioning measurement results sent by the M base stations; select the X base stations from the M base stations; and obtain the positioning measurement results corresponding to the X base stations

Optionally, in an embodiment of the present invention, in response to the AI model being deployed on the base station, the processing module is further configured to: send the positioning measurement results corresponding to the X base stations, as the input of the AI model, to a base station where the AI model is deployed.

Optionally, in an embodiment of the present invention, in response to the AI model being deployed on the base station, the X base stations selected by the terminal device from the M base stations are the same as X base stations selected by other terminal devices.

Optionally, in an embodiment of the present invention, the transceiving module is further configured to: determine a value of X; arrange the M base stations according to a position order of the M base stations; and uniformly or non-uniformly select the X base stations from arranged M base stations.

Optionally, in an embodiment of the present invention, the transceiving module is further configured to: determine the value of X based on a protocol agreement; or determine the value of X based on a configuration of the base station.

Optionally, in an embodiment of the present invention, the transceiving module is further configured to: determine a base station set, in which the base station set includes the X base stations of the M base stations; and determine the X base stations based on the base station set.

Optionally, in an embodiment of the present invention, the transceiving module is further configured to: determine the base station set based on a protocol agreement; or determine the base station set based on a configuration of the base station.

Optionally, in an embodiment of the present invention, different terminal devices select different X base stations.

Optionally, in an embodiment of the present invention, the transceiving module is further configured to: determine a value of X; and select the X base stations from the M base stations based on first path arrival times of channels between the M base stations and the terminal device.

Optionally, in an embodiment of the present invention, the transceiving module is further configured to: select the X base stations from the M base stations, where the X base stations having the shortest first path arrival times among the first path arrival times of the channels between the M base stations and the terminal device are selected.

Optionally, in an embodiment of the present invention, the apparatus is further configured to: determine position coordinates of the X base stations selected.

Optionally, in an embodiment of the present invention, the processing module is further configured to: determine the positioning measurement results corresponding to the X base stations and the position coordinates of the X base stations as the input of the AI model.

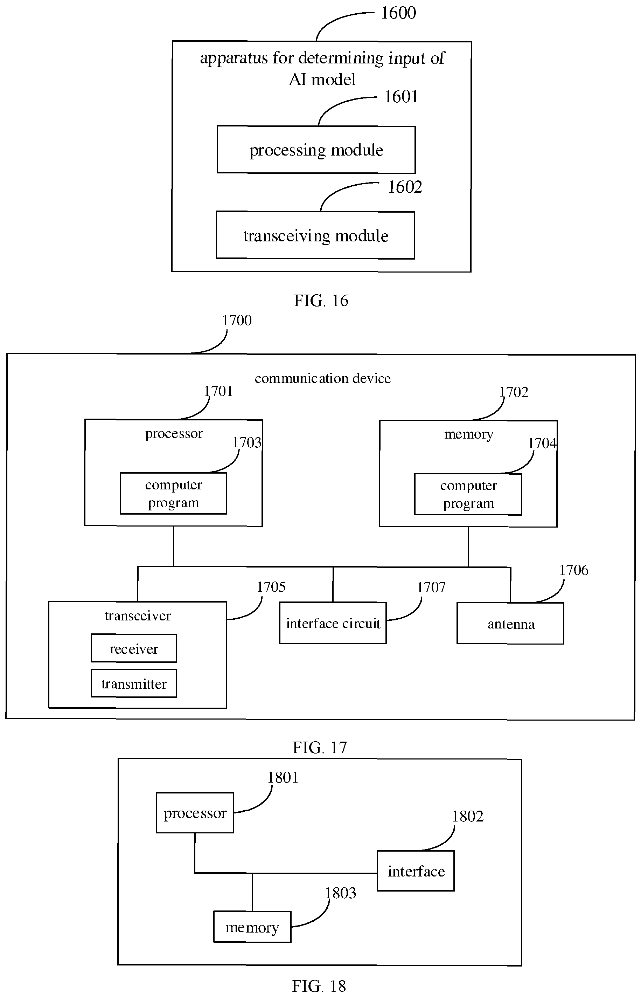

FIG. 16 is a schematic block diagram of an apparatus for determining an input of an AI model provided by an embodiment of the present invention, which is configured in a base station. The AI model is deployed on the base station. As shown in FIG. 16, the apparatus may include: a transceiving module configured to obtain positioning measurement results corresponding to a preset number X of base stations, in which the preset number X is less than a total number M of all base stations participating in a positioning measurement, where X and M are both positive integers; and a processing module configured to determine the positioning measurement results corresponding to the X base stations as the input of the AI model.

To summarize, in the apparatus for determining the input of the AI model provided in the embodiments of the present invention, in a case that the AI model is deployed on a base station side, the base station may first obtain the positioning measurement results corresponding to the preset number X of base stations, in which the preset number X is less than the total number M of all base stations participating in the positioning measurement, where X and M are both positive integers; thereafter, determine the positioning measurement results corresponding to the X base stations as the input of the AI model. From this, it may be seen that in the present invention, positioning measurement results corresponding to the all base stations participating in the positioning measurement are not used as the input of the AI model, but positioning measurement results corresponding to some base stations participating in the positioning measurement are used as the input of the AI model. That is, the input of the AI model is simplified, which may greatly reduce an input dimension of the AI model, reduce a processing burden of the AI model, and reduce a storage requirement. In addition, a signaling burden may also be reduced in a case that the input of the AI model is transmitted over radio. The present invention provides a lightweight AI model that does not affect a positioning precision and has a low complexity.

Optionally, in an embodiment of the present invention, the positioning measurement result includes at least one of: an impulse response obtained by measuring a channel between a base station and the terminal device being located; or a measurement power obtained by measuring a reference signal transmitted between a base station and the terminal device being located.

Optionally, in an embodiment of the present invention, in response to the AI model being deployed on a base station, and the positioning measurement results being obtained by a measurement by the terminal device, the transceiving module is further configured to: obtain positioning measurement results corresponding to the X base stations sent by the terminal device.

Optionally, in an embodiment of the present invention, in response to the AI model being deployed on a base station, and the positioning measurement results being obtained by a measurement by the base station, the transceiving module is further configured to: obtain positioning measurement results sent by other base stations participating in the positioning measurement and not deploying the AI model; select the X base stations from all M base stations participating in the positioning measurement; and obtain the positioning measurement results corresponding to the X base stations.

Optionally, in an embodiment of the present invention, the transceiving module is further configured to: the base station receive positioning measurement results corresponding to the same or different X base stations from a plurality of terminal devices in a case that the AI model is configured to locate the plurality of terminal devices.

Optionally, in an embodiment of the present invention, the transceiving module is further configured to: select the same or different X base stations from the all M base stations for different terminal devices in a case that the AI model is configured to locate a plurality of terminal devices.

Optionally, in an embodiment of the present invention, the transceiving module is further configured to: determine a value of X; arrange the M base stations according to a position order of the M base stations; and uniformly or non-uniformly select the X base stations from arranged M base stations.

Optionally, in an embodiment of the present invention, the transceiving module is further configured to: determine the value of X based on a protocol agreement; and the base station autonomously determine the value of X.

Optionally, in an embodiment of the present invention, the transceiving module is further configured to: determine a base station set, in which the base station set includes the X base stations of the M base stations; and determine the X base stations based on the base station set.

Optionally, in an embodiment of the present invention, the transceiving module is further configured to: determine the base station set based on a protocol agreement; and the base station autonomously determine the base station set.

Optionally, in an embodiment of the present invention, the transceiving module is further configured to: determine a value of X; and select the X base stations from the M base stations based on first path arrival times of channels between the M base stations and the terminal device.

Optionally, in an embodiment of the present invention, the transceiving module is further configured to: select the X base stations from the M base stations, where the X base stations having the shortest first path arrival times among the first path arrival times of the channels between the M base stations and the terminal device are selected.

Optionally, in an embodiment of the present invention, the apparatus is further configured to: determine position coordinates of the X base stations selected.

Optionally, in an embodiment of the present invention, the processing module is further configured to: determine the positioning measurement results corresponding to the X base stations and the position coordinates of the X base stations as the input of the AI model.

Referring to FIG. 17, which is a schematic block diagram of a communication device 1700 provided by an embodiment of the present invention. The communication device 1700 may be a network device, may also be a terminal device, may also be a chip, a chip system, or a processor that supports the network device to implement the above methods, and may also be a chip, a chip system, or a processor that supports the terminal device to implement the above methods. The device may be configured to implement the methods as described in the above method embodiments, and for details, reference may be made to the descriptions in the above method embodiments.

The communications device 1700 may include one or more processors 1701. The processor 1701 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, the terminal device, a terminal device chip, a DU or a CU, etc.) execute computer programs, and process data of computer programs.

Optionally, the communication device 1700 may further include one or more memories 1702 having stored therein a computer program 1704. The processor 1701 executes the computer program 1704, to cause the communication device 1700 to implement the methods as described in the above method embodiments. Optionally, the memory 1702 may have stored therein data. The communication device 1700 and the memory 1702 may be provided separately or integrated together.

Optionally, the communication device 1700 may further include a transceiver 1705 and an antenna 1706. The transceiver 1705 may be called a transceiving element, a transceiving machine, a transceiving circuit or the like, for implementing a transceiving function. The transceiver 1705 may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device 1700 may further include one or more interface circuits 1707. The interface circuit 1707 is configured to receive a code instruction and transmit the code instruction to the processor 1701. The processor 1701 runs the code instruction to enable the communication device 1700 to execute the methods as described in the foregoing method embodiments.

In an implementation manner, the processor 1701 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation manner, the processor 1701 may have stored therein a computer program 1703 that, when run on the processor 1701, causes the communication device 1700 to implement the methods as described in the foregoing method embodiments. The computer program 1703 may be embedded in the processor 1701, and in this case, the processor 1701 may be implemented by a hardware.

In an implementation manner, the communication device 1700 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), a negative metal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device, but the scope of the communication device described in the present invention is not limited thereto, and a structure of the communication device is not limited by FIG. 17. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, reference may be made to the schematic block diagram of the chip shown in FIG. 18. The chip shown in FIG. 18 includes a processor 1801 and an interface 1802. One or more processors 1801 may be provided, and a plurality of interfaces 1802 may be provided.

Optionally, the chip further includes a memory 1803 for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present invention.

The present invention further provides a readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are distinguished only for convenience of description, and are not intended to limit the scope of embodiments of the present invention, and nor are they intended to represent sequential order.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of information in each table are just examples, and may be configured as other values, which are not limited in the present invention. When configuring a correspondence between the information and various parameters, it is not necessary to configure all the correspondences shown in the tables. For example, the correspondences shown in some rows of the tables in the present invention may not be configured. For another example, appropriate variations or adjustments (such as splitting, merging, and so on) can be made based on the above table. The names of parameters shown in the titles of the above tables may also adopt other names understandable in the communication device, and the values or representations of the parameters may also be other values or representations understandable in the communication device. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present invention may be understood as definition, pre-definition, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such an implementation should not be considered as extending beyond the scope of the present invention.

Those skilled in the art can clearly understand that for the convenience and brevity of the description, for the specific working process of the above-described system, device and unit, reference may be made to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for determining an input of an artificial intelligent (AI) model, wherein an output of the AI model is configured to determine a position of a terminal device, and the method is performed by the terminal device and comprises:
obtaining positioning measurement results corresponding to a preset number X of base stations, wherein the preset number X is less than a total number M of all base stations participating in a positioning measurement, where X and M are both positive integers; and
determining the positioning measurement results corresponding to the X base stations as the input of the AI model.

2. The method according to claim 1, wherein the positioning measurement results each comprise at least one of:
an impulse response obtained by measuring a channel between a base station and the terminal device being located; or
a measurement power obtained by measuring a reference signal transmitted between a base station and the terminal device being located.

3. The method according to claim 1, wherein in response to the AI model being deployed on the terminal device or a base station, and the positioning measurement results being obtained by a measurement by the terminal device, obtaining the positioning measurement results corresponding to the preset number X of base stations comprises:
determining positioning measurement results corresponding to the M base stations obtained by the measurement;
selecting the X base stations from the M base stations; and
obtaining the positioning measurement results corresponding to the X base stations.

4. The method according to claim 1, wherein in response to the AI model being deployed on the terminal device, and the positioning measurement results being obtained by a measurement by the base station, obtaining the positioning measurement results corresponding to the preset number X of base stations comprises:
obtaining corresponding positioning measurement results sent by the M base stations;
selecting the X base stations from the M base stations; and
obtaining the positioning measurement results corresponding to the X base stations.

5. The method according to claim 3, wherein in response to the AI model being deployed on the base station, determining the positioning measurement results corresponding to the X base stations as the input of the AI model comprises:
sending the positioning measurement results corresponding to the X base stations, as the input of the AI model, to a base station where the AI model is deployed.

6. The method according to claim 3, wherein in response to the AI model being deployed on the base station, the X base stations selected by the terminal device from the M base stations are the same as X base stations selected by other terminal devices.

7. The method according to claim 3 or 4, wherein selecting the X base stations from the M base stations comprises:
determining a value of X;
arranging the M base stations according to a position order of the M base stations; and
uniformly or non-uniformly selecting the X base stations from arranged M base stations.

8. The method according to claim 7, wherein a manner for determining the value of X comprises at least one of:
determining the value of X based on a protocol agreement; or
determining the value of X based on a configuration of the base station.

9. The method according to claim 3 or 4, wherein selecting the X base stations from the M base stations comprises:
determining a base station set, wherein the base station set comprises the X base stations of the M base stations; and
determining the X base stations based on the base station set.

10. The method according to claim 9, wherein a manner for determining the base station set comprises at least one of:
determining the base station set based on a protocol agreement; or
determining the base station set based on a configuration of the base station.

11. The method according to claim 3 or 4, wherein selecting the X base stations from the M base stations comprises:
determining a value of X; and
selecting the X base stations from the M base stations based on first path arrival times of channels between the M base stations and the terminal device.

12. The method according to claim 11, wherein selecting the X base stations from the M base stations based on the first path arrival times of the channels between the M base stations and the terminal device comprises:
selecting the X base stations from the M base stations, wherein the X base stations having shortest first path arrival times among the first path arrival times of the channels between the M base stations and the terminal device are selected.

13. The method according to claim 11, further comprising:
determining position coordinates of the X base stations selected.

14. The method according to claim 13, wherein determining the positioning measurement results corresponding to the X base stations as the input of the AI model comprises:
determining the positioning measurement results corresponding to the X base stations and the position coordinates of the X base stations as the input of the AI model.

15. A method for determining an input of an AI model, wherein an output of the AI model is configured to determine a position of a terminal device, and the method is performed by a base station and comprises:
obtaining positioning measurement results corresponding to a preset number X of base stations, wherein the preset number X is less than a total number M of all base stations participating in a positioning measurement, where X and M are both positive integers; and
determining the positioning measurement results corresponding to the X base stations as the input of the AI model.

16. The method according to claim 15, wherein the positioning measurement result comprises at least one of:
an impulse response obtained by measuring a channel between a base station and the terminal device being located; or
a measurement power obtained by measuring a reference signal transmitted between a base station and the terminal device being located.

17. The method according to claim 15, wherein in response to the AI model being deployed on a base station, and the positioning measurement results being obtained by a measurement by the terminal device, obtaining the positioning measurement results corresponding to the preset number X of base stations comprises:
obtaining positioning measurement results corresponding to the X base stations sent by the terminal device.

18. The method according to claim 15, wherein in response to the AI model being deployed on a base station, and the positioning measurement results being obtained by a measurement by the base station, obtaining the positioning measurement results corresponding to the preset number X of base stations comprises:
obtaining positioning measurement results sent by other base stations participating in the positioning measurement and not deploying the AI model;
selecting the X base stations from all M base stations participating in the positioning measurement; and
obtaining the positioning measurement results corresponding to the X base stations.

19. The method according to claim 17, wherein obtaining the positioning measurement results corresponding to the X base stations sent by the terminal device comprises:
the base station receiving positioning measurement results corresponding to the same or different X base stations from a plurality of terminal devices in a case that the AI model is configured to position the plurality of terminal devices.

20. The method according to claim 18, wherein selecting the X base stations from the all M base stations participating in the positioning measurement comprises:
selecting the same or different X base stations from the all M base stations for different terminal devices in a case that the AI model is configured to position a plurality of terminal devices.

21. The method according to claim 18, wherein selecting the X base stations from the all M base stations participating in the positioning measurement comprises:
determining a value of X;
arranging the M base stations according to a position order of the M base stations; and
uniformly or non-uniformly selecting the X base stations from arranged M base stations.

22. The method according to claim 21, wherein determining the value of X comprises:
determining the value of X based on a protocol agreement; and
the base station autonomously determining the value of X.

23. The method according to claim 18, wherein selecting the X base stations from the all M base stations participating in the positioning measurement comprises:
determining a base station set, wherein the base station set comprises the X base stations of the M base stations; and
determining the X base stations based on the base station set.

24. The method according to claim 23, wherein determining the base station set comprises:
determining the base station set based on a protocol agreement; and
the base station autonomously determining the base station set.

25. The method according to claim 18, wherein selecting the preset number X of base stations from the M base stations comprises:
determining a value of X; and
selecting the X base stations from the M base stations based on first path arrival times of channels between the M base stations and the terminal device.

26. The method according to claim 25, wherein selecting the X base stations from the M base stations based on the first path arrival times of the channels between the M base stations and the terminal device comprises:
selecting the X base stations from the M base stations, wherein the X base stations having shortest first path arrival times among the first path arrival times of the channels between the M base stations and the terminal device are selected.

27. The method according to claim 25, further comprising:
determining position coordinates of the X base stations selected.

28. The method according to claim 25, wherein determining the positioning measurement results corresponding to the X base stations as the input of the AI model comprises:
determining the positioning measurement results corresponding to the X base stations and the position coordinates of the X base stations as the input of the AI model.

29. An apparatus for determining an input of an AI model, configured in a terminal device, comprising:
a transceiving module configured to obtain positioning measurement results corresponding to a preset number X of base stations, wherein the preset number X is less than a total number M of all base stations participating in a positioning measurement, where X and M are both positive integers; and
a processing module configured to determine the positioning measurement results corresponding to the X base stations as the input of the AI model.

30. An apparatus for determining an input of an AI model, configured in a base station, comprising:
a transceiving module configured to obtain positioning measurement results corresponding to a preset number X of base stations, wherein the preset number X is less than a total number M of all base stations participating in a positioning measurement, where X and M are both positive integers; and
a processing module configured to determine the positioning measurement results corresponding to the X base stations as the input of the AI model.

31. A communication device, comprising:
a processor; and
a memory having stored therein a computer program that, when executed by the processor, causes the device to implement the method according to any one of claims 1 to 14 or any one of claims 15 to 28.

32. A communication device, comprising a processor and an interface circuit;
wherein the interface circuit is configured to receive code instructions and transmit the code instructions to the processor; and
the processor is configured to run the code instructions to implement the method according to any one of claims 1 to 14 or any one of claims 15 to 28.

33. A computer-readable storage medium having stored therein instructions that, when executed, cause the method according to any one of claims 1 to 14 or any one of claims 15 to 28.
